(19) 

Europäisches
Patentamt
European
Patent Office
Office européen
des brevets

(11) **EP 4 650 197 A1**

(12) **EUROPEAN PATENT APPLICATION**
published in accordance with Art. 153(4) EPC

(43) Date of publication:
**19.11.2025 Bulletin 2025/47**

(21) Application number: **24858455.9**

(22) Date of filing: **23.08.2024**

(51) International Patent Classification (IPC):
**B60H 1/00** (2006.01)  **F24F 11/64** (2018.01)
**F24F 11/00** (2018.01)

(52) Cooperative Patent Classification (CPC):
**B60H 1/00; F24F 11/63; F24F 11/88;** F24F 2110/00;
F24F 2110/10; F24F 2110/20; F24F 2110/30;
F24F 2110/64; F24F 2110/70; F24F 2110/80;
F24F 2120/00

(86) International application number:
**PCT/CN2024/114096**

(87) International publication number:
**WO 2025/044914 (06.03.2025 Gazette 2025/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.08.2023 CN 202311084907**

(71) Applicant: **Huawei Technologies Co., Ltd.**
**Shenzhen, Guangdong 518129 (CN)**

(72) Inventors:
• **WANG, Yixuan**
**Shenzhen, Guangdong 518129 (CN)**
• **SUN, Zhida**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **COMFORT ADJUSTMENT METHOD AND RELATED APPARATUS**

(57)     This application discloses a comfort adjustment method and a related apparatus. The method includes: obtaining environment information and user information that correspond to a first space, where the first space is a non-open space; determining, based on the environment information, the user information, and a thermal comfort representation indicator, a control indicator of at least one device corresponding to the first space; and controlling the at least one device based on the control indicator of the at least one device, to improve comfort experience of a user.

```
┌──────────────────────────────────────────────────────────┐
│ Obtain environment information and user information that   │─── S1
│   correspond to a first space, where the first space is    │
│                  a non-open space                          │
└──────────────────────────────────────────────────────────┘
                            │
                            ▼
┌──────────────────────────────────────────────────────────┐
│ Determine, based on the environment information, the user  │─── S2
│ information, and a thermal comfort representation indicator,│
│  a control indicator of at least one device corresponding  │
│                   to the first space                       │
└──────────────────────────────────────────────────────────┘
                            │
                            ▼
┌──────────────────────────────────────────────────────────┐
│ Control the at least one device based on the control       │─── S3
│ indicator of the at least one device                       │
└──────────────────────────────────────────────────────────┘
```

FIG. 1c

EP 4 650 197 A1

**Description**

This application claims priority to Chinese Patent Application No. CN202311084907.6, filed with the China National Intellectual Property Administration on August 25, 2023 and entitled "COMFORT ADJUSTMENT METHOD AND RELATED APPARATUS", which is incorporated herein by reference in its entirety.

**TECHNICAL FIELD**

This application relates to the field of electronic technologies, and in particular, to a comfort adjustment method and a related apparatus.

**BACKGROUND**

User's comfort is affected by various factors. To provide a user with more comfortable experience, comfort is usually adjusted through an adjustment device. For example, a temperature is adjusted through a temperature adjustment device, and a wind speed is adjusted through a wind speed adjustment device.

The adjustment device can quickly adjust a comfort status in a space. However, the adjustment device usually automatically adjusts the comfort based on a function mode preset by the user, and therefore an actual requirement of the user cannot be met.

**SUMMARY**

This application provides a comfort adjustment method and a related apparatus, to improve comfort experience of a user.

According to a first aspect, this application provides a comfort adjustment method, which may be applied to the field of electronic technologies. The method includes:

first, obtaining environment information and user information that correspond to a first space, where the first space is a non-open space; then, determining, based on the environment information, the user information, and a thermal comfort representation indicator, a control indicator of at least one device corresponding to the first space; and finally, controlling the at least one device based on the control indicator of the at least one device.

In comparison with automatically adjusting the comfort based on a function mode preset by the user, in this application, adjusting comfort with reference to the environment information, the user information, and the thermal comfort representation indicator implements adaptive adjustment of the comfort, avoids a trouble of a manual operation of a user, and further improves user experience. In addition, in comparison with adjusting the comfort through a single device, in this embodiment, performing joint adjustment through a plurality of devices based on the environment information, the user information, and the thermal comfort representation indicator can further increase a comfort adjustment response speed, more quickly achieve comfort effect, improve energy efficiency per unit, and reduce energy consumption.

In a possible implementation of the first aspect, before determining, based on the environment information, the user information, and the thermal comfort representation indicator, the control indicator of the at least one device corresponding to the first space, the method further includes:

obtaining the thermal comfort representation indicator corresponding to the user information.

In this implementation, the thermal comfort representation indicator is associated with the user information, so that the thermal comfort representation indicator can be adjusted with adjustment of the user information, to implement adaptive adjustment of the thermal comfort representation indicator, meet a comfort requirement of the user, and further improve user comfort experience.

In a possible implementation of the first aspect, the at least one device includes at least two devices.

Determining, based on the environment information, the user information, and the thermal comfort representation indicator, the control indicator of the at least one device corresponding to the first space includes:

determining, based on the environment information, the user information, and the thermal comfort representation indicator, a function relationship between control indicators of the at least two devices corresponding to the first space; and
determining the respective control indicators of the at least two devices based on a first constraint and the function relationship.

Controlling the at least one device based on the control indicator of the at least one device includes:
separately controlling the at least two devices based on the respective control indicators of the at least two devices.

In this implementation, in comparison with adjusting the comfort through a single device, in this embodiment, jointly adjusting the comfort through a plurality of device can further increase a comfort adjustment response speed, more quickly achieve comfort effect, improve energy efficiency per unit, and reduce energy consumption.

In a possible implementation of the first aspect, the first constraint includes at least one of an environment constraint, a device constraint, a user constraint, and an energy consumption constraint.

In this implementation, constraints of an environment, the user, a device, energy consumption, and the like are combined, so that a respective control indicator corresponding to the at least one device can meet requirements of the environment, the user, the device, the energy consumption, and the like. This further improves comfort experience of the user.

In a possible implementation of the first aspect, the user information includes behavior information of the user and thermal comfort information of the user.

The behavior information of the user includes a stage of a behavior activity of the user.

The thermal comfort information of the user includes at least one of the following: information about clothing, bedding, or another body surface covering, a physiological indicator, a metabolic rate, an age, or a comfort preference that are of the user.

In this implementation, the user information may include the stage of the behavior activity of the user, and comfort experience of the user is further improved by combining the behavior information of the user and the thermal comfort information of the user.

In a possible implementation of the first aspect, the behavior activity of the user is taking a nap.

At least two stages of the behavior activity respectively correspond to different thermal comfort representation indicators.

In this implementation, when the behavior activity of the user is taking a nap, the control indicator of the at least one device in the first space may be determined based on the thermal comfort representation indicators corresponding to the user in different stages of the nap, to meet requirements of the user in the different stages, and implement adaptive adjustment of user comfort.

In a possible implementation of the first aspect, the at least two stages of the behavior activity include at least two of a pre-sleep stage, an in-sleep stage, and an end-of-sleep stage.

In a possible implementation of the first aspect, the environment information includes at least one of an air temperature, a relative humidity, an average radiation temperature, a wind speed, an air volume, a wind direction, noise, and a device surface temperature.

In this implementation, in addition to including an air-related parameter in the current environment, the environment information may be further related to a parameter of a device installed in the environment. The comfort is adjusted with reference to the environment information, so that comfort experience of the user can be improved.

In a possible implementation of the first aspect, the thermal comfort representation indicator includes a predicted mean vote PMV.

In a possible implementation of the first aspect, determining, based on the environment information, the user information, and the thermal comfort representation indicator, the control indicator of the at least one device corresponding to the first space includes:

inputting the environment information, the user information, and the thermal comfort representation indicator into a first model, to determine the control indicator of the at least one device corresponding to the first space.

In this implementation, the user information, the environment information, and the thermal comfort information of the user are input into the first model, so that the control indicator of the at least one device can be adaptively adjusted based on the environment information, the user information, and the thermal comfort representation indicator, to implement adaptive control of the device and improve user experience.

In a possible implementation of the first aspect, the first model includes a PMV-PPD thermal comfort model.

In this implementation, the control indicator of the at least one device corresponding to the first space is determined by using the PMV-PPD thermal comfort model, so that cold and hot feelings of the user can be referred to when comfort adjustment is performed in combination with the at least one device, to improve comfort experience of the user.

In a possible implementation of the first aspect, the control indicator of the at least one device includes at least one of the following: the air temperature, the relative humidity, the wind speed, the wind direction, the device surface temperature, or a glass transmittance.

In this implementation, the corresponding device may be adjusted based on different parameter indicators corresponding to the at least one device, to improve comfort experience of the user.

In a possible implementation of the first aspect, the first space includes a house, a vehicle, a sleeping cabin, or a submarine.

According to a second aspect, this application provides a comfort adjustment apparatus, including:

an obtaining module, configured to obtain environment information and user information that correspond to a first space, where the first space is a non-open space;

a processing module, configured to determine, based on the environment information, the user information, and a thermal comfort representation indicator, a control indicator of at least one device corresponding to the first space; and a control module, configured to control the at least one device based on the control indicator of the at least one device.

In a possible implementation of the second aspect, the obtaining module is further configured to: obtain the thermal comfort representation indicator corresponding to the user information.

In a possible implementation of the second aspect, the at least one device includes at least two devices.

The processing module is further configured to:

determine, based on the environment information, the user information, and the thermal comfort representation indicator, a function relationship between control indicators of the at least two devices corresponding to the first space; and

determine the respective control indicators of the at least two devices based on a first constraint and the function relationship.

The control module is further configured to:
separately control the at least two devices based on the respective control indicators of the at least two devices.

In a possible implementation of the second aspect, the first constraint includes at least one of an environment constraint, a device constraint, a user constraint, and an energy consumption constraint.

In a possible implementation of the second aspect, the user information includes behavior information of a user and thermal comfort information of the user.

The behavior information of the user includes a stage of a behavior activity of the user.

The thermal comfort information of the user includes at least one of the following: information about clothing, bedding, or another body surface covering, a physiological indicator, a metabolic rate, an age, or a comfort preference that are of the user.

In a possible implementation of the second aspect, the behavior activity of the user is taking a nap.

At least two stages of the behavior activity respectively correspond to different thermal comfort representation indicators.

In a possible implementation of the second aspect, the at least two stages of the behavior activity include at least two of a pre-sleep stage, an in-sleep stage, and an end-of-sleep stage.

In a possible implementation of the second aspect, the environment information includes at least one of an air temperature, a relative humidity, an average radiation temperature, a wind speed, an air volume, a wind direction, noise, and a device surface temperature.

In a possible implementation of the second aspect, the thermal comfort representation indicator includes a predicted mean vote PMV.

In a possible implementation of the second aspect, the processing module is further configured to: input the environment information, the user information, and the thermal comfort representation indicator into a first model, to determine the control indicator of the at least one device corresponding to the first space.

In a possible implementation of the second aspect, the first model includes a PMV-PPD thermal comfort model.

In a possible implementation of the second aspect, the control indicator of the at least one device includes at least one of the following: the air temperature, the relative humidity, the wind speed, the wind direction, the device surface temperature, or a glass transmittance.

In a possible implementation of the second aspect, the first space includes a house, a vehicle, a sleeping cabin, or a submarine.

According to a third aspect, this application provides a comfort adjustment method, including:

first, obtaining first information, where the first information includes environment information and user information; then, inputting the first information into a first model, to obtain a function relationship between respective control indicators corresponding to a plurality of devices, where the first model is determined based on the plurality of devices; then, obtaining respective to-be-adjusted control indicators corresponding to the plurality of devices based on second information, where the second information includes the function relationship; and finally, separately adjust the plurality of corresponding devices based on the to-be-adjusted control indicators respectively corresponding to the plurality of devices.

In a possible implementation of the third aspect, the first information further includes a comfort representation indicator, the user information includes behavior information of a user, and the comfort representation indicator is related to the behavior information of the user.

In a possible implementation of the third aspect, the comfort representation indicator includes a predicted mean vote PMV.

In a possible implementation of the third aspect, the user information further includes thermal comfort information of the user, and the method further includes:

adjusting the comfort representation indicator based on the behavior information of the user, to obtain an adjusted comfort representation indicator; and
inputting the environment information, the thermal comfort information of the user, and the adjusted comfort representation indicator into the first model, to obtain the function relationship between the respective to-be-adjusted control indicators corresponding to the plurality of devices.

In a possible implementation of the third aspect, the second information further includes a first constraint, and the first constraint includes at least one of an environment constraint, a user constraint, a device constraint, and an energy consumption constraint.

In a possible implementation of the third aspect, the first model includes a PMV-PPD thermal comfort model.

In a possible implementation of the third aspect, the environment information includes at least one of an air temperature, a relative humidity, an average radiation temperature, a wind speed, an air volume, a wind direction, noise, and a device surface temperature.

In a possible implementation of the third aspect, the user information includes the behavior information of the user and the thermal comfort information of the user, the behavior information of the user includes a stage of a behavior activity of the user, and the thermal comfort information of the user includes at least one of information about clothing, bedding, or another body surface covering, a physiological indicator, a metabolic rate, an age, or a comfort preference that are of the user.

According to a fourth aspect, this application provides a control device, including a memory and a processor.

The memory is configured to store a computer program.

The processor is configured to execute the computer program, so that the control device implements the method according to any one of the first aspect or the possible implementations of the first aspect.

According to a fifth aspect, this application provides an adjustment system, including a plurality of devices and the control device according to any one of the third aspect or the possible implementations of the third aspect. Alternatively, the adjustment system includes a plurality of devices and the comfort adjustment apparatus according to any one of the second aspect or the possible implementations of the second aspect.

According to a sixth aspect, this application provides a computer program product. When the computer product is executed by a computer, the method according to any one of the first aspect or the possible implementations of the first aspect is implemented.

According to a seventh aspect, this application provides a chip system. The chip system includes a processor, configured to implement the method according to any one of the first aspect or the possible implementations of the first aspect. In a possible design, the chip system further includes a memory, configured to store program instructions and/or data. The chip system may include a chip, or may include a chip and another discrete component.

According to an eighth aspect, this application provides a computer-readable storage medium. The storage medium stores a computer program. When the computer program is executed by a processor, the method according to any one of the first aspect or the possible implementations of the first aspect is implemented.

The solutions according to the second aspect to the eighth aspect are used to implement or cooperate with the method according to the first aspect or the possible implementations of the first aspect, and therefore can achieve same or corresponding beneficial effect as the first aspect. Details are not described herein again.

**BRIEF DESCRIPTION OF DRAWINGS**

FIG. 1a is a diagram of a structure of an adjustment system according to an embodiment of this application;
FIG. 1b is a diagram of a structure of a control device according to an embodiment of this application;
FIG. 1c is a schematic flowchart of a comfort adjustment method according to an embodiment of this application;
FIG. 2 is another schematic flowchart of a comfort adjustment method according to an embodiment of this application;
FIG. 3 is a distribution curve diagram of PMV values of a user in a sleep process according to an embodiment of this application;
FIG. 4 is another schematic flowchart of a comfort adjustment method according to an embodiment of this application;
FIG. 5 is another schematic flowchart of a comfort adjustment method according to an embodiment of this application;
FIG. 6a is a diagram of variations of an air temperature in different sleep stages when a user wears summer clothing according to an embodiment of this application;

FIG. 6b is a diagram of variations of an air temperature in different sleep stages when a user is covered with bedding according to an embodiment of this application; and

FIG. 7 is a diagram of a structure of a comfort adjustment apparatus according to an embodiment of this application.

## DESCRIPTION OF EMBODIMENTS

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include", "have" and any other variants mean to cover the non-exclusive inclusion, for example, a process, method, system, product, or device that includes a list of steps or modules is not necessarily limited to those expressly listed steps or modules, but may include other steps or modules not expressly listed or inherent to such a process, method, product, or device.

The term "and/or" in this application describes only an association relationship for describing associated objects and represents that three relationships may exist. For example, A and/or B may represent the following three cases: Only A exists, both A and B exist, and only B exists. In addition, the character "/" in this application generally indicates an "or" relationship between the associated objects.

It should also be noted that in some alternative implementations, the marked functions/actions may not appear in orders of the accompanying drawings. For example, actually, two accompanying drawings shown in succession may essentially occur at the same time or may sometimes be performed in a reverse order, depending on the related functions/actions.

In embodiments of this application, unless otherwise specified, "at least one" means one or more, and "a plurality of" means two or more. It should be understood that, in this application, "when", "if", and "provided that" all mean that an apparatus performs corresponding processing in an objective situation, and are not intended to limit time, and the terms do not mean that the apparatus is required to perform a determining action during implementation, and do not mean any other limitation. In addition, the specific term "example" means "used as an example, embodiment or illustration". Any embodiment described as an "example" is not necessarily explained as being superior or better than other embodiments.

The following describes embodiments of this application with reference to the accompanying drawings. A person of ordinary skill in the art may learn that, with technology development and emergence of a new scenario, the technical solutions provided in embodiments of this application are also applicable to a similar technical problem.

First, to better understand the solutions in embodiments of this application, the following first describes an application scenario of embodiments of this application. A comfort adjustment method provided in embodiments of this application is mainly applied to an adjustment system, to improve comfort experience of a user.

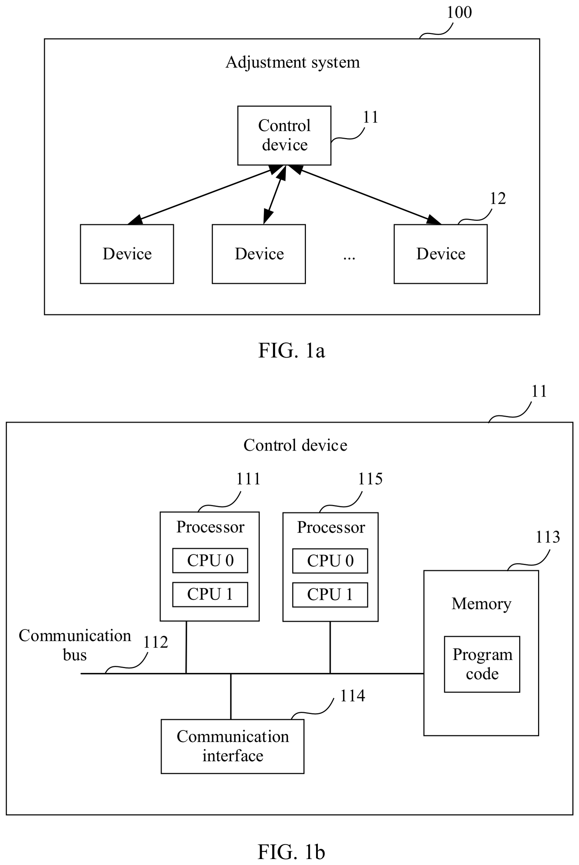

With reference to FIG. 1a and FIG. 1b, the following describes an example of an application scenario of the comfort adjustment method provided in embodiments of this application. Refer to FIG. 1a. FIG. 1a is a diagram of a structure of an adjustment system according to an embodiment of this application. The adjustment system 100 includes several devices 12 and a control device 11.

The control device 11 is connected to a host (not shown in the figure). The control device 11 and the host may be integrated into a same central processing unit (central processing unit, CPU). The control device 11 may be a computing device, for example, a server, a desktop computer, a mobile device (for example, a mobile phone), or a vehicle-mounted device. It should be understood that the control device 11 may be any device that has a computing capability in a space. This is not limited herein. A writing system and an application are installed on the control device 11. The control device 11 may receive an input/output (input/output, I/O) request from the host, to control at least one device 12. The control device 11 and the device 12 may be in a local connection or a remote connection, including a wired connection, a wireless connection, and the like.

It should be noted that FIG. 1a is merely an example for description. Shapes of the control device 11 and the device 12 shown in FIG. 1a do not represent actual physical structures of the control device 11 and the device 12. This is not limited herein. In addition, a manner of a connection between the control device 11 and the device 12 is not limited in embodiments of this application, provided that the control device 11 and the device 12 can communicate with each other. During actual application, the adjustment system 100 may include two or more control devices. A physical structure and a function of each control device are similar to those of the control device 11. In addition, a manner of a connection between control devices and a manner of a connection between any control device and a device are not limited in embodiments, provided that the control devices can communicate with each other and the control devices and the device can communicate with each other. In addition, in this embodiment, when sending an instruction to a device, the control device usually sends the instruction to a plurality of devices at the same time.

Refer to FIG. 1b. FIG. 1b is a diagram of a structure of a control device according to an embodiment of this application. As shown in FIG. 1b, the control device 11 is implemented by using a general bus architecture.

The control device 11 includes at least one processor 111, a communication bus 112, a memory 113, and at least one communication interface 114.

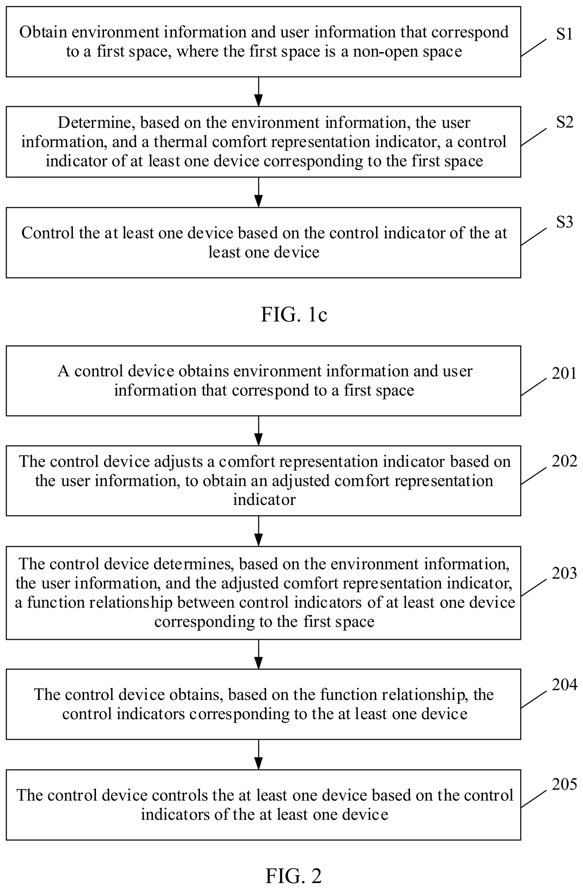

The processor 111, the memory 113, and the communication interface 114 communicate with each other through the communication bus 112, or may implement communication through wireless transmission or by another means. The memory 113 is configured to store instructions. The processor 111 is configured to execute the instructions stored in the memory 113. The memory 113 stores program code, and the processor 111 may invoke the program code stored in the memory 113 to perform step 201 to step 205 in the embodiment shown in FIG. 2. For specific implementation, refer to specific descriptions of step 201 to step 205 in the embodiment shown in FIG. 2. Details are not described herein.

Optionally, the processor 111 is a general-purpose central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device (programmable logic device, PLD), a transistor logic device, a hardware component, or any combination thereof. The PLD is a complex programmable logic device (complex programmable logic device, CPLD), a field programmable gate array (field programmable gate array, FPGA), generic array logic (generic array logic, GAL), or any combination thereof.

The communication bus 112 is configured to transmit information between the processor 111, the memory 113, and the communication interface 114. The communication bus 112 is classified into an address bus, a data bus, a control bus, and the like. For ease of representation, only one thick line is used to represent the bus in the figure, but this does not mean that there is only one bus or only one type of bus.

Optionally, the memory 113 is a read-only memory (read-only memory, ROM) or another type of static storage device that can store static information and instructions. Alternatively, the memory 113 is a random access memory (random access memory, RAM) or another type of dynamic storage device that can store information and instructions. Alternatively, the memory 113 is an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a disk storage medium or another magnetic storage device, or any other medium that can be configured to carry or store expected program code in a form of instructions or a data structure and that can be accessed by a computer. However, this is not limited thereto. Optionally, the memory 113 exists independently, and is connected to the processor 111 through the communication bus 112. Optionally, the memory 113 is integrated with the processor 111.

The communication interface 114 is configured to communicate with another device or a communication network through any transceiver-type apparatus. The communication interface 114 includes a wired communication interface. Optionally, the communication interface 114 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

During specific implementation, in an embodiment, the processor 111 includes one or more CPUs, for example, a CPU 0 and a CPU 1 shown in FIG. 1b.

During specific implementation, in an embodiment, the control device 11 includes a plurality of processors, for example, the processor 111 and a processor 115 shown in FIG. 1b. Each of the processors is a single-core processor (single-CPU) or a multi-core processor (multi-CPU). The processor herein is one or more devices, circuits, and/or processing cores configured to process data (for example, computer program instructions).

In some embodiments, the memory 113 is configured to store program code for executing the solutions of this application. The processor 111 executes the program code stored in the memory 113.

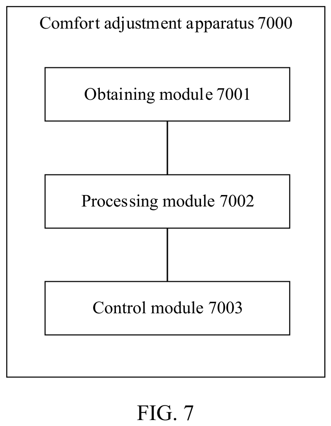

It may be understood that the method steps in embodiments of this application may be implemented in hardware, or may be implemented in software instructions that may be executed by the processor 111. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. In addition, a scope of the apparatus described in this application is not limited thereto, and a structure of the apparatus may not be limited by that in FIG. 7 below. The apparatus may be an independent device, or may be a part of a larger device. For example, the apparatus may be:

(1) an independent integrated circuit IC, a chip, or a chip system or subsystem;

(2) a set including one or more ICs, where optionally, the IC set may further include a storage component configured to store data and/or instructions;

(3) a module that can be embedded in another device;

(4) a receiver, a terminal, an intelligent terminal, a wireless device, a handheld device, a mobile unit, a vehicle-mounted device, an artificial intelligence device, a machine device, a home device, a medical device, an industrial device, and the like;

(5) others, or the like.

It may be clearly understood by a person skilled in the art that, for the purpose of convenient and brief description, for a detailed working process of the foregoing apparatus, refer to a corresponding process in the foregoing method embodiments. Details are not described herein again.

It may be understood that the structure of the adjustment system shown in FIG. 1a and FIG. 1b is merely an example. The comfort adjustment method provided in embodiments of this application may be applied to but is not limited to the foregoing described structure. This is not limited herein.

The comfort adjustment method provided in embodiments of this application may be applied to any scenario in which comfort is adjusted with reference to an environment and a user in a non-open space such as a house, a vehicle, or a cabin (for example, a sleeping cabin or a submarine). The space may be a local space, devices with different functions are disposed in the space, and comfort may be jointly adjusted between the devices by adjusting different parameters. The devices may be connected in a wired or wireless manner. Alternatively, devices with different functions may be one device integrating a plurality of functions.

Example scenario 1: in-vehicle scenario

In this scenario, when the user is driving or resting in the vehicle, thermal environment information in the vehicle, a thermal preference difference and a metabolic rate of the user, and the like all affect comfort experience of the user in the vehicle. According to the comfort adjustment method provided in embodiments of this application, comfort may be adjusted by controlling an air conditioner, a seat, vehicle window glass, and the like. For example, comfort in the vehicle is adjusted based on the thermal preference difference and the metabolic rate of the human body by adjusting a wind speed and an air volume of the air conditioner, an angle and a surface temperature of the seat, and a radiation transmittance of the window glass, to meet a comfort requirement of the user.

Example scenario 2: sleep scenario

In this scenario, the user prepares to rest for a period of time, and the user may have different requirements for a thermal environment in different sleep stages. Thermal environment information in the space, a thermal preference difference and a metabolic rate of the user in a sleep process all affect comfort experience of the user during sleep. According to the comfort adjustment method provided in embodiments of this application, the comfort may be adjusted by controlling the air conditioner, a fan, or the like, to meet a comfort requirement of the user.

The comfort adjustment method provided in embodiments of this application may be applied to the adjustment system, and is performed by the control device of the adjustment system to control the plurality of devices, to adjust comfort in the space. The control device in the adjustment system may be connected to the devices and the devices may be connected to each other in a wireless or wired manner to jointly control the devices in the space, to adjust user comfort in the space.

Currently, in a mainstream comfort adjustment method, a preset automatic adjustment mode is generally used. For example, a user customizes an in-vehicle temperature and duration through a control system to keep the in-vehicle temperature constant. Alternatively, a temperature in a room is kept constant by automatically adjusting an in-vehicle temperature through an in-vehicle control system. Alternatively, a temperature in a room is adjusted by monitoring a temperature at a specific time point. For example, after a nap mode is enabled for 0.5 hours, a temperature of the air conditioner automatically increases (during cooling) or decreases (during heating), or a temperature of the air conditioner increases by 2°C within 2 hours and remains unchanged (during cooling) or decreases by 2°C and remains unchanged (during heating).

However, adjusting the comfort in the space in the preset automatic adjustment mode has the following problems:

(1) A wind speed and a wind direction when an automatic air conditioner is turned on may not be suitable for a specific scenario. For example, in the sleep scenario, the user easily has an obvious sense of airflow in a closed environment, and is easily awakened by the air exhaust. In addition, an excessively high wind speed generates noise, affecting sleep quality.

(2) If a temperature is set to a constant value, a thermal comfort requirement of a human body in a sleep process cannot be fully met, and a change of the thermal environment requirement of the human body in the sleep process is not considered.

(3) Impact of an external environment radiation change is not considered. For example, in an in-vehicle scenario, compared with an in-vehicle part, a vehicle body is greatly affected by an external environment change. In a current technology, impact of an external environment is usually ignored, and consequently adjustment is not intelligent.

To resolve the foregoing problems, an embodiment of this application provides a comfort adjustment method. The method may be applied to the adjustment system in the foregoing scenarios. Specifically, refer to FIG. 1c. FIG. 1c is a schematic flowchart of a comfort adjustment method according to an embodiment of this application. The method specifically includes the following steps. S1: Obtain environment information and user information that correspond to a first space, where the first space is a non-open space. S2: Determine, based on the environment information, the user information, and a thermal comfort representation indicator, a control indicator of at least one device corresponding to the first space. S3: Control the at least one device based on the control indicator of the at least one device.

It may be understood that, according to a first aspect, in comparison with automatically adjusting the comfort based on the function mode preset by the user, in this application, adjusting the comfort with reference to the environment information, the user information, and the thermal comfort representation indicator implements adaptive adjustment of the comfort, avoids a trouble of manual operation of the user, and further improves user experience. According to a second aspect, in comparison with adjusting the comfort through a single device, in this embodiment, performing joint adjustment through a plurality of devices based on the environment information, the user information, and the thermal comfort representation indicator can further increase a comfort adjustment response speed, more quickly achieve comfort effect, improve energy efficiency per unit, and reduce energy consumption.

The foregoing describes a scenario to which the comfort adjustment method provided in embodiments of this application is applied. The following describes in detail an implementation process of the comfort adjustment method provided in embodiments of this application.

First, to better understand solutions in embodiments of this application, the following first describes related terms and concepts that may be used in embodiments of this application.

(1) Predicted mean vote

The predicted mean vote (predicted mean vote, PMV) is an evaluation indicator that reflects thermal sensation of a human body, and represents average thermal sensation of people for a same environment. For example, the PMV may be classified into seven comfort evaluation levels: -3 (cold), -2 (cool), -1 (slightly cool), 0 (natural), +1 (slightly warm), +2 (warm), and +3 (hot).

(2) Predicted percentage of dissatisfied

The predicted percentage of dissatisfied (predicted percentage of dissatisfied, PPD) indicates a percentage of people who are dissatisfied with a thermal environment, namely, a percentage of population dissatisfied with the thermal environment.

Refer to FIG. 2. FIG. 2 is another schematic flowchart of a comfort adjustment method according to an embodiment of this application. The comfort adjustment method may be performed by a control device of an adjustment system. As shown in FIG. 2, the control device may perform the following step 201 to step 205, to improve comfort experience of a user.

Step 201: The control device obtains environment information and user information that correspond to a first space.

In embodiments of this application, the first space mainly indicates the non-open space in the foregoing example. The environment information indicates information about related parameters of a current environment and a device. The device mainly indicates a related device for adjusting a parameter, for example, a device like an air conditioner or a fan that adjusts an air volume, an air speed, an air direction, and an air temperature, or a humidity adjustment device that adjusts a relative humidity. Correspondingly, in different application scenarios, for example, in a vehicle, the device may include a vehicle-mounted air conditioner, a fan, a seat (which may be configured to adjust a temperature of a seat surface), and window glass (which may be configured to adjust a sunlight transmittance), and the like. In an optional implementation, the environment information includes at least one of an air temperature, a relative humidity, an average radiation temperature, a wind speed, an air volume, a wind direction, noise, and a device surface temperature.

In this implementation, the air temperature mainly indicates air temperatures inside and outside a space and an air temperature around a user. It should be understood that the comfort adjustment method provided in embodiments of this application is mainly used to improve comfort experience of the user. Therefore, a temperature, a humidity, an average radiation temperature, a wind speed, an air volume, a wind direction, noise, and the like around the user need to be considered. The wind speed mainly indicates a variation of a wind speed around the human body. Radiation mainly indicates sunlight radiation and net long-wave radiation received by the human body, which can be represented by the average radiation temperature.

It may be understood that, in actual application, specific content of the environment information may be set based on an actual requirement or an experiment. For example, the environment information may further include an orientation of a fan blade. This is not limited herein.

In an optional implementation, the user information includes behavior information of the user and thermal comfort information of the user.

The behavior information of the user includes a stage of a behavior activity of the user.

The thermal comfort information of the user includes at least one of the following: information about clothing, bedding, or another body surface covering, a physiological indicator, a metabolic rate, an age, or a comfort preference that are of the user.

In this implementation, the behavior information of the user mainly includes a stage of a behavior activity of the user. For the user, the user may have different requirements and preferences in different stages of the behavior activity. The control device adjusts comfort based on the behavior information of the user, to help improve comfort experience of the user. The thermal comfort information of the user mainly indicates information related to thermal sensation of the user.

Both the behavior activity of the user and the stage of the behavior activity may be obtained based on data set by the user or one or more devices such as a wearable device, a camera, and a sensor. For example, a nap stage of the user is determined based on start time and duration of a sleep mode set by the user, a sleep time point and duration that are of the user and that are determined by the wearable device, an action like eye closing monitored by the camera, a breathing frequency monitored by a microphone, and the like, and a pulse, breathing, a body movement, bed-staying, and the like of the user that are detected by the pressure sensor.

It may be understood that the control device may adjust the comfort with reference to the behavior information of the user and the thermal comfort information of the user. A comfort preference of the user may be obtained based on a parameter preset by the user and/or a current environment parameter, or may be obtained based on historical data. The comfort preference of the user is classified into a subjective preference and an objective preference. The subjective preference mainly indicates a requirement of the user for comfort, for example, the user is more comfortable at a specific temperature or a specific wind speed. The objective preference mainly indicates related information that can improve comfort experience of the user more quickly or more effectively based on actual experiments or theoretical data.

Optionally, the behavior activity of the user is taking a nap.

The behavior activity of the user includes different stages. For example, it is assumed that the user is taking a nap. The user may be in one of three stages: a pre-sleep stage, an in-sleep stage, and an end-of-sleep/wake-up stage.

Optionally, at least two stages of the behavior activity include at least two of the pre-sleep stage, the in-sleep stage, and the end-of-sleep stage. It should be understood that the thermal comfort information of the user and the environment information may be different in different behavior stages. A sleep scenario is used as an example. Wind speeds around a human body before and after sleep, sunlight radiation and net long-wave radiation received by the human body before and the sleep, changes in a human body metabolic rate before, after, and during the sleep, clothing and bedding thermal resistance information before and after the sleep, and the like may be different. Embodiments of this application are merely examples for description. This is not limited.

Step 202: The control device adjusts a comfort representation indicator based on the user information, to obtain an adjusted comfort representation indicator.

In embodiments of this application, after obtaining the initial comfort representation indicator, the control device may adjust the comfort representation indicator based on the user information, to meet comfort requirements of the user for different stages of the behavior activity and different scenarios. The comfort representation indicator mainly indicates an evaluation indicator of the user for the comfort. Because the different stages of the behavior activity of the user have different requirements for the comfort, the control device mainly adjusts the comfort representation indicator based on the behavior information of the user.

In comparison with adjusting the comfort based on a comfort representation indicator that is directly set by the user or a default comfort representation indicator, or based on only comfort representation indicators at different individual time points of the behavior activity of the user, in embodiments of this application, adjusting the comfort representation indicator in stages based on the different stages of the behavior activity of the user to match an actual thermal requirement of the user can further improve comfort experience of the user.

In an optional implementation, the control device may obtain the comfort representation indicator based on the historical data, an experiment result, and the like.

The control device may obtain a general specified value of the comfort representation indicator based on historical empirical data, experimental data, theoretical literature, or the like. Optionally, the control device may further set a corresponding change curve based on comfort representation indicators corresponding to different stages, to set the corresponding comfort representation indicators for the different stages.

In an optional implementation, the comfort representation indicator includes a PMV.

In this implementation, a sleep behavior is used as an example. The comfort representation indicator may be determined based on different stages of a nap of the user. The different stages of the nap of the user may be determined based on start and end moments and duration of sleep that are set by the user, a sleep status, and a behavior like bed-staying.

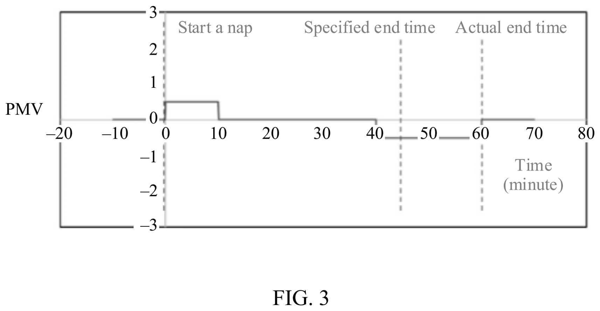

Values of the PMV may be different in different sleep stages. For details, refer to FIG. 3. FIG. 3 is a distribution curve diagram of PMV values of a user in a sleep process according to an embodiment of this application. A value of the PMV may be set based on the following reasons.

(1) Stage 1 (pre-sleep): Maintain a warm environment within a thermal comfort range to reduce a difference between a remote skin temperature and a local skin temperature of the user and promote falling asleep (the PMV is used as an example, and PMV=0.5).
(2) Stage 2 (in sleep): Maintain thermal comfort, where sleep quality is improved in a thermally neutral environment (the PMV is used as an example, and PMV=0).
(3) Stage 3 (end-of-sleep/wake-up): Maintain a cool environment within the thermal comfort range to reduce a probability of sleep inertia (the PMV is used as an example, and PMV=-0.5).

The user manually enabling a nap mode is a start point of the first stage (pre-sleep). Alternatively, a start point may be determined through a device. For example, the user lying down, closing eyes, changing from dynamic to static, or the like is used as the start point. An end point of the first stage is when it is determined that the user enters a sleep state, for example, when it is determined, through a camera or another device, that the user enters the sleep state by capturing a behavior of the user.

A start point of the second stage (in-sleep) is an end point of the first stage, and an end point of the second stage may be determined based on an end point of the nap mode. For example, if the end point of the nap mode is 3:00 p.m., the end point of the second stage is a fixed time (for example, 5 min) before the end point of the nap mode. The end point of the nap mode may be manually set by the user. Alternatively, an end point of the second stage may be determined based on a user status. For example, if the user wakes up in advance, the nap mode ends in advance, and the user does not need to enter the third stage.

An end point of the third stage (end-of-sleep) is the end point of the nap by default. Alternatively, an end point of the third stage may be determined based on the user status. For example, if the user turns off an alarm clock and continues to sleep, the end point of the third stage is adjusted to prolong the third stage.

In actual application, currently, the comfort is usually adjusted based on a default value of the PMV, and the comfort cannot be dynamically adjusted based on an actual requirement of the user and information such as an environment. Consequently, comfort experience of the user is poor. In this embodiment, the control device may adjust a value of the PMV based on a stage of the behavior activity of the user, to more accurately match the comfort requirement of the user.

In addition, the stage of the behavior activity of the user may be adjusted based on an actual situation, and does not change according to a specified time sequence. The control device may adjust, based on the actual requirement, the stage of the behavior activity of the user, to determine a more accurate PMV target value. For example, it is assumed that the user is in the third stage, and the user turns off the alarm clock and continues to sleep for 10 minutes. In this case, to ensure sleep quality of the user, the control device may set a stage of the nap of the user to the second stage in the first 5 minutes of the set 10 minutes. Correspondingly, the control device sets the PMV target value to a value corresponding to the second stage. However, in the last 5 minutes, to enable the user to overcome the sleep inertia, the control device may set the PMV target value to a value corresponding to the third stage, to reduce the sleep inertia of the user.

It may be understood that the PMV value may alternatively be set based on a user-defined cold/hot preference. If the user frequently performs manual temperature adjustment within a period of time, the control device may also collect related user data to adapt to a historical operation, to meet a user preference. In addition, in addition to being related to a heat preference, a use habit, and the like of the user, values of the PMV in different stages may be related to a people type of the user, for example, an elderly person, a child, a pregnant woman, and a patient with a disease. This may be specifically set based on an actual requirement.

Optionally, the comfort representation indicator may further include a thermal sensation indicator like an equivalent homogeneous temperature (equivalent homogeneous temperature, EHT), or a dynamic thermal sensation (dynamic thermal sensation, DTS). This is not limited herein.

It may be understood that the control device may select a corresponding comfort representation indicator based on different scenarios and requirements.

Step 203: The control device determines, based on the environment information, the user information, and the adjusted comfort representation indicator, a function relationship between control indicators of at least one device corresponding to the first space.

In embodiments of this application, the function relationship between the control indicators of the at least one device corresponding to the first space mainly indicates a function relationship between target values or target ranges of the respective control indicators corresponding to the at least one device.

A specific composition of each device and a target value or a target range of a control indicator corresponding to each device may be determined based on the environment information and the user information. For example, it is assumed that the environment information includes a wind speed, a relative humidity, and a seat surface temperature. The control device may control, based on behavior information of the user in the different stages, the comfort requirement of the user, another constraint condition, and the like, an air conditioner or a fan, a humidity adjustment device, and a seat heating device to separately adjust the wind speed, the relative humidity, and the seat surface temperature to a target value or a target range that meets the comfort. In the foregoing example, the device may include the air conditioner or the fan and the humidity adjustment device. Respective to-be-adjusted control indicators corresponding to devices may include a target value of the wind speed adjusted by the air conditioner or the fan, a target value of the relative humidity adjusted by the humidity adjustment device, and a target value of the seat surface temperature adjusted by the seat heating device.

In addition, at a moment, the control device may obtain, based on parameter information corresponding to the moment, a function relationship between target values of respective control indicators corresponding to the at least one device at the moment. In a period of time, the control device may obtain, based on average parameter information in the period of time, a function relationship between target values of respective control indicators corresponding to the at least one device in the period of time.

It may be understood that, in actual application, the devices and the respective control indicators corresponding to the devices may be set based on an actual requirement or an experiment. In different application scenarios and different requirements, types of devices and control indicators are different. Embodiments of this application are merely used as examples for description and are not limited.

In an optional implementation, the at least one device includes at least two devices.

That the control device determines, based on the environment information, the user information, and the thermal comfort representation indicator, the control indicators of the at least one device corresponding to the first space includes: determining, based on the environment information, the user information, and the thermal comfort representation indicator, a function relationship between control indicators of the at least two devices corresponding to the first space.

In this implementation, the control device performs joint adjustment on a plurality of devices based on the environment information, the user information, and the thermal comfort representation indicator, to further increase a comfort adjustment response speed and more quickly achieve comfort effect.

In an optional implementation, the control device inputs the environment information, the user information, and the adjusted thermal comfort indicator into a first model, to determine the control indicators of the at least one device corresponding to the first space.

In this implementation, the control device may input the environment information, the user information, and the adjusted thermal comfort indicator into the preset first model, to determine the control indicators of the at least one device corresponding to the first space.

During actual application, if the control device needs to add a device to perform joint comfort adjustment with another device, in some cases, the control device may further need to add a calculation item related to the device to the first model, to perform joint calculation with reference to a parameter indicator of the another device included in the first model, to obtain a function relationship between control indicators corresponding to devices.

It should be understood that, when a control indicator of a single device is calculated based on the first model, because an unknown quantity is unique, the first model outputs the control indicator of the single device. When respective control indicators corresponding to a plurality of devices are calculated based on the first model, because a calculation item of a specified device is newly added to the first model, there are a plurality of unknown quantities, and a unique solution cannot be obtained. Therefore, the first model outputs a function relationship based on the respective control indicators corresponding to the plurality of devices. For example, to avoid a blowing sense and noise, in addition to controlling the air conditioner, if the control device determines, based on internal and external environment information and device information, that a seat needs to be heated to adjust the comfort in combination with the air conditioner, the control device may measure a size and a temperature of a current seat surface in contact with the human body, and add a heat conduction item (a calculation item corresponding to the seat surface temperature) to the first model based on measured parameters, so that after inputting the environment information, the user information, the adjusted comfort representation indicator, and the current seat surface temperature into the first model, the control device outputs a function relationship between a target value of the air temperature under a comfort condition and a target value of the seat surface temperature.

In an optional implementation, the control device may obtain environment parameters inside and outside a vehicle and device information inside the vehicle, to determine a device participating in comfort adjustment.

In this implementation, optionally, the first model includes a PMV-PPD thermal comfort model.

Optionally, the first model includes an EHT equivalent temperature model, a Fiala DTS thermal comfort model, and the like.

For example, the first model is a PMV-PPD thermal comfort model, and the heat conduction item is added to the first model. A formula of the first model is:

$$PMV=(0.303e^{-0.036M} + 0.0275)L=(0.303e^{-0.036M} + 0.0275)*(M–W–C–R–E)$$

Here, L is heat load, M is for metabolic heat production, W is for external work, C is for convection heat transfer, R is for radiation heat transfer, and E is for evaporative respiratory heat transfer.

When the heat conduction term related to the seat surface temperature is added to the first model, a formula of the first model is:

$$PMV=(0.303e^{-0.036M} + 0.0275)L=(0.303 * e^{-0.036M} + 0.0275)*(M–W–C–R–E–Q)$$

Here, L is the heat load, Q is the heat conduction term, and is a function of the seat surface temperature T and a difference $\Delta T$ between a skin temperature and the seat surface temperature, where the skin is skin that is of the user and that is in contact with the seat surface.

Optionally, an expression of Q is:

$$Q = S * \frac{\Delta T}{I_{cl}}$$

Here, S is a seat contact area fraction, and $I_{cl}$ is clothing thermal resistance.

It should be noted that the foregoing formulas are merely examples. Specific content of the formulas and content of the added calculation item may be set based on an actual requirement. This is not limited herein.

Step 204: The control device obtains, based on the function relationship, the control indicators corresponding to the at least one device.

In embodiments of this application, after determining, with reference to the environment information, the user information, and the comfort representation indicators corresponding to the user in the different stages, the function relationship between the control indicators of the at least one device corresponding to the first space, the control device may further obtain, through calculation, the control indicators corresponding to the at least one device.

The control indicators corresponding to the at least one device is a target value or a target range of the control indicators corresponding to the at least one device. The comfort needs to be adjusted with reference to a current actual environment requirement, the user requirement, and other information. Therefore, during actual application, if any group of values obtained through solving in the function relationship between the control indicators corresponding to the at least one device meets a requirement, a plurality of groups of parameter values that meet the requirement may be directly determined from the function relationship based on an actual situation.

Optionally, the control device obtains, based on a first constraint and the function relationship, the control indicators corresponding to the at least one device.

It may be understood that the first constraint is constraint information corresponding to an actual environment, the user requirement, and the like. If the specific constraint condition exists, the control device may limit, with reference to the first constraint condition, a value range of the control indicators corresponding to the at least one device, to further obtain, from the function relationship between the respective control indicators corresponding to the at least one device, a result that meets the condition.

In an optional implementation, the first constraint includes at least one of an environment constraint, a user constraint, a device constraint, and an energy consumption constraint.

In this implementation, the control device may select, from the function relationship between the control indicators corresponding to the at least one device with reference to the first constraint, a control indicator that meets a requirement.

The first constraint includes constraints in a plurality of dimensions, and the environment constraint may include indicators such as temperature and humidity inside and outside the space and around the human body. For example, to avoid the blowing sense, a blowing sense indicator may be calculated based on the environment information such as temperature distribution and wind speed distribution. If the blowing sense indicator exceeds a threshold, the wind speed is reduced to a value below the threshold, and the new wind speed value is substituted into the first model. For example, if a difference between an internal temperature and an external temperature is too large, the air conditioner needs to enable a large wind level to ensure that the internal temperature of the space can be reduced or increased to a comfortable target temperature in a timely manner (which is also a device constraint). However, problems such as high wind noise and an obvious blowing sense may occur, and cooperation of ventilation/heating of another device like a seat is required. Alternatively, for example, noise inside the vehicle does not exceed 35 dB, and the relative humidity does not exceed 65%. The user constraint may include a user preference. For example, different users have different requirements or preferences for the blowing sense, the relative humidity (for example, an asthma patient has a requirement for the relative humidity), sunlight radiation tolerance, and the like. The device constraint may include a noise level, a wind direction level, and the like of the device. For example, to avoid air conditioner noise, the control device may determine a noise level based on a wind level. If the noise exceeds a threshold, the control device reduces the wind speed to a value below the threshold, and substitutes the new wind speed value into the first model. For example, the device constraint may include whether the current device is available, and responses of the device in a current environment inside and outside the vehicle (whether noise and an excessively strong blowing sense are generated). The energy consumption constraint is mainly considered from a perspective of energy consumption, and a corresponding constraint may be set based on an actual energy consumption requirement.

In an optional implementation, the at least one device includes at least two devices.

The control device determines respective control indicators of the at least two devices based on a function relationship between the control indicators of the at least two devices corresponding to the first space.

In this implementation, after determining, with reference to the environment information, the user information, and the comfort representation indicators corresponding to the user in the different stages, the function relationship between the control indicators of the at least two devices corresponding to the first space, the control device may further obtain, through calculation, the control indicators corresponding to the at least two devices.

In this implementation, optionally, the control device determines the respective control indicators of the at least two devices based on the first constraint and the function relationship between the control indicators of the at least two devices corresponding to the first space.

It may be understood that, during actual application, it is assumed that the control device jointly controls three devices to adjust the comfort. The control device usually determines target value ranges of parameters of two of the three devices based on the first constraint, and then determines a target value range of a parameter of a remaining device based on the function relationship.

Step 205: The control device controls the at least one device based on the control indicators of the at least one device.

In embodiments of this application, after determining the control indicators of the at least one device, the control device may control the at least one device based on the control indicators. For example, the control device adjusts the air conditioner based on a change amount of a specified temperature of the air conditioner, adjusts the seat based on the seat surface temperature, a heating level, and time, and adjusts the seat based on a ventilation level of the seat.

In an optional implementation, the control indicators of the at least one device include at least one of the following: the air temperature, the relative humidity, the wind speed, the wind direction, the device surface temperature, or a glass transmittance.

In this implementation, the control indicators of the at least one device may include a plurality of parameters, and different parameters may correspond to different devices. For example, after determining the control indicators of the at least one device, the control device may control a device like the air conditioner based on the air temperature, may control the humidity adjustment device based on the relative humidity, may control a device like the air conditioner or the electric fan based on the wind speed and the wind direction, may adjust a device like the seat based on a device surface temperature, and may adjust a device like the glass based on a refractive index of the glass. In addition, the device surface temperature includes the seat surface temperature, and may also include a surface temperature of another device having a heat radiation function, for example, an infrared heat radiator (for example, an electric heater).

In an optional implementation, the at least one device includes at least two devices.

The control device separately controls the at least two devices based on the respective control indicators of the at least two devices.

In this implementation, the control device may separately control the at least two devices based on the respective control indicators of the at least two devices, to jointly adjust the comfort of the user through a plurality of devices. This further improves adjustment efficiency and reduces energy consumption to some extent.

To better understand the comfort adjustment method provided in embodiments of this application, the following provides descriptions with reference to specific examples.

Scenario example 1

At a low temperature, only the air conditioner is used to control thermal comfort of an enclosed environment. It is assumed that a temperature is -15°C in winter. In a basement without sunlight radiation and heating, a person gets on a vehicle when wearing a winter suit, takes off a coat, wears an indoor winter suit (1 clo), and takes a 45-min nap. An initial temperature inside the vehicle is close to a temperature outside the vehicle.

In this scenario, because temperatures inside and outside the vehicle are low, if the temperature is increased only through the air conditioner for heating, heating time may be long, the wind speed of the air conditioner may be excessively high, and problems of excessive noise and excessively high energy consumption may be caused. To avoid problems such as a blowing sense, noise, duration, and energy consumption, the seat surface may be controlled to be heated, to quickly increase the temperature inside the vehicle, and meet a heating requirement of the user.

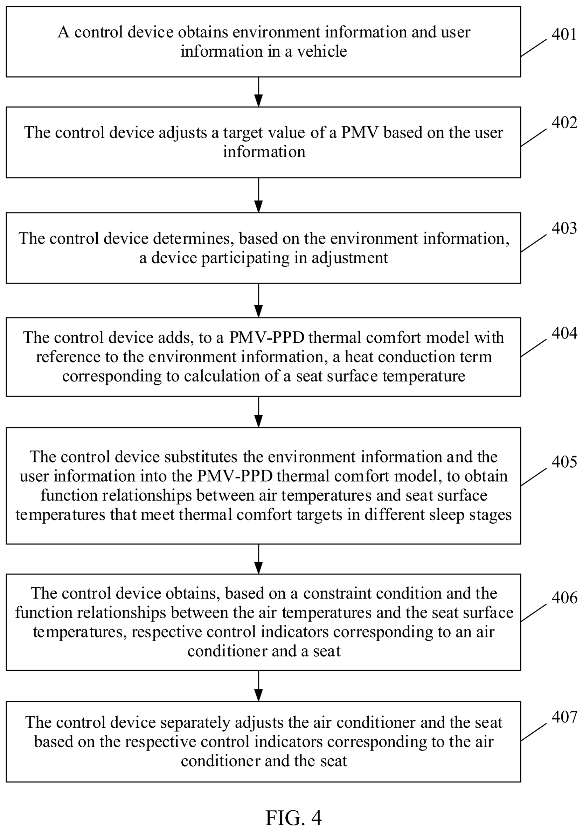

In view of this, an embodiment of this application provides a comfort adjustment method. The method is mainly performed by a control device in an adjustment system. For details, refer to FIG. 4. FIG. 4 is another schematic flowchart of a comfort adjustment method according to an embodiment of this application. As shown in FIG. 4, step 401 to step 407 are mainly included.

Step 401: The control device obtains environment information and user information in a vehicle.

The environment information includes information such as an in-vehicle air temperature, a wind speed around a person, a relative humidity, sunlight radiation, and a temperature and a size of a seat surface.

Step 402: The control device adjusts a target value of a PMV based on the user information.

Optionally, the control device may adjust the target value of the PMV based on behavior information of a user, for example, a stage of a behavior activity of the user.

Optionally, the user information includes information such as historical user usage data (for example, an air conditioner temperature during thermal comfort, and a device parameter in a past sleep process in a similar working condition), a human body metabolic rate, and thermal resistance of clothing or bedding.

Step 403: The control device determines, based on the environment information, a device participating in adjustment.

In this embodiment, the control device may add a seat with reference to temperature information and other constraint information of the device to adjust comfort.

It may be understood that, because temperatures inside and outside the vehicle are low, if the temperature is increased only through the air conditioner for heating, heating time may be long, the wind speed of the air conditioner may be excessively high, and problems of excessive noise and excessively high energy consumption may be caused. To avoid problems such as a blowing sense, noise, duration, and energy consumption, the seat surface may be controlled to be heated, to quickly increase the temperature inside the vehicle, and meet a heating requirement of the user.

There is no requirement on an execution sequence of step 402 and step 403.

Step 404: The control device adds, to a PMV-PPD thermal comfort model with reference to the environment information, a heat conduction term corresponding to calculation of the seat surface temperature.

Step 404 is an optional step. The control device may pre-add, to the PMV-PPD thermal comfort model based on the environment information, the heat conduction item corresponding to the calculation of the seat surface temperature. After obtaining information such as the temperature and the size of the seat surface, the control device directly inputs the information into the PMV-PPD thermal comfort model to which the heat conduction term is added, to output function relationships between air temperatures and seat surface temperatures that meet thermal comfort targets in different sleep stages. Alternatively, the control device may add, to the PMV-PPD thermal comfort model with reference to the current environment information, the heat conduction item corresponding to the calculation of the seat surface temperature, and then perform next calculation.

Step 405: The control device substitutes the environment information and the user information into the PMV-PPD thermal comfort model, to obtain the function relationships between the air temperatures and the seat surface temperatures that meet the thermal comfort targets in the different sleep stages.

Step 406: The control device obtains, based on a constraint condition and the function relationships between the air temperatures and the seat surface temperatures, respective control indicators corresponding to the air conditioner and the seat.

In this step, the control device may set, with reference to a device design principle, an energy consumption constraint, and the like, a low target air temperature (for example, 20°C) that enables a wind speed to be moderate, to output a range (30°C to 36°C) of a target seat-human body contact surface temperature based on a determined range of the target air temperature and the function relationship, enable seat heating, and turn to a heat preservation mode after the target temperature range is reached.

Step 407: The control device separately adjusts the air conditioner and the seat based on the respective control indicators corresponding to the air conditioner and the seat.

Scenario example 2

Thermal comfort is regulated in a closed environment with a high relative humidity. It is assumed that an ambient temperature is 28°C on a day. In a rainy environment, a user wears summer clothing and takes a 45-min nap in the environment. An initial temperature and a relative humidity in the environment are equivalent to those in an external environment.

In this scenario, because the relative humidity in the environment is high, in addition to adjusting the temperature, the relative humidity further needs to be adjusted in combination with a humidity adjustment device, to resolve a problem that the relative humidity is excessively high, and further improve comfort experience of the user.

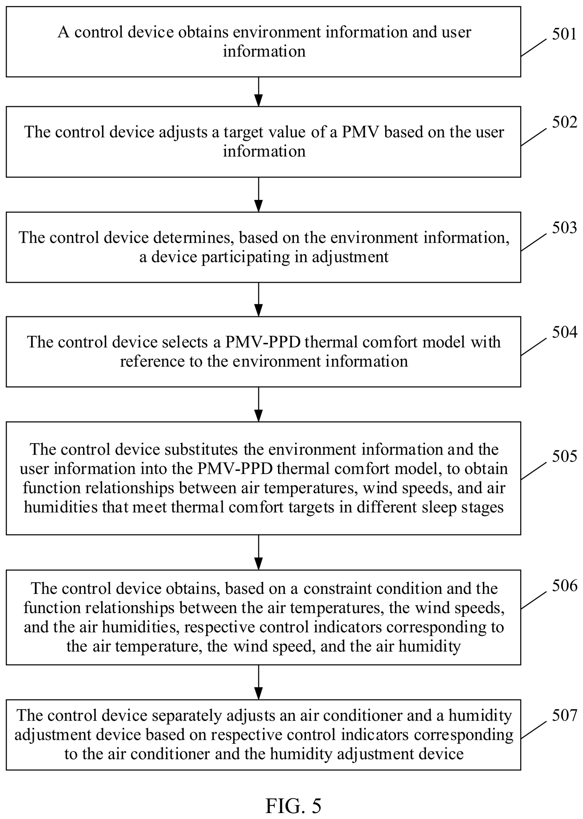

In view of this, an embodiment of this application provides a comfort adjustment method. The method is mainly performed by a control device in an adjustment system. For details, refer to FIG. 5. FIG. 5 is another schematic flowchart of a comfort adjustment method according to an embodiment of this application. As shown in FIG. 5, step 501 to step 507 are mainly included.

Step 501: The control device obtains environment information and user information.

The environment information includes information such as an air temperature, a wind speed around a person, and a relative humidity. The user information includes information such as historical user usage data (for example, an air conditioner temperature during thermal comfort, and a device parameter in a past sleep process in a similar working condition), a human body metabolic rate, and thermal resistance of clothing or bedding.

It may be understood that information about the thermal resistance of the clothing or the bedding of a user affects an air temperature of the user in a sleep process.

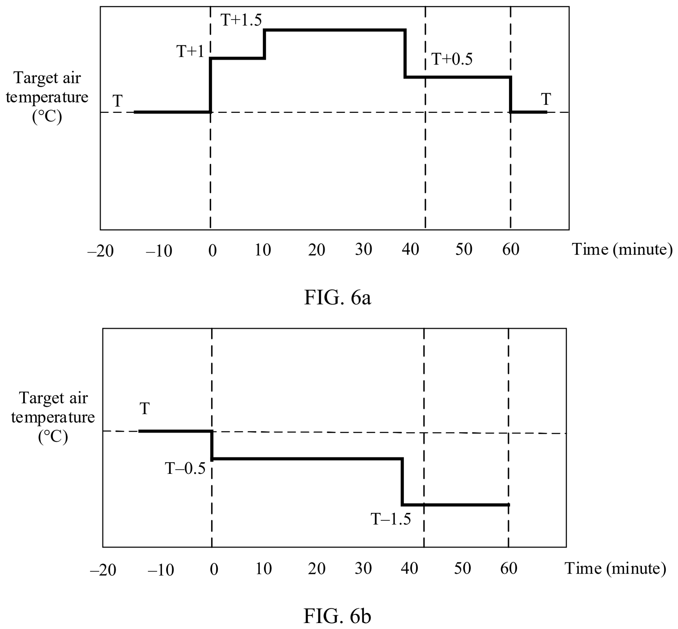

For example, refer to FIG. 6a. FIG. 6a is a diagram of variations of an air temperature in different sleep stages when the user wears summer clothing according to an embodiment of this application. It is assumed that the user wears the summer clothing, and a pre-sleep air temperature is T. In this case, in the sleep process of the user, metabolic heat production of the user decreases. To ensure a thermal comfort requirement of the user and prevent the user from being cool, the temperature T may continuously increase. At the end of sleep, to reduce sleep inertia of the user, the temperature may be reduced, to help the user wake up as soon as possible and avoid sleep inertia.

Refer to FIG. 6b. FIG. 6b is a diagram of variations of an air temperature in the different sleep stages when the user is covered with the bedding according to an embodiment of this application. It is assumed that the user is covered with a 0.5-clo quilt, and the pre-sleep air temperature is T. In this case, in the sleep process of the user, to ensure the thermal comfort requirement of the user and prevent the user from feeling excessively hot because heat dissipation is reduced after the user is covered with the quilt, the temperature T may decrease (with a variation of 0.5°C). At the end of the sleep, to reduce the sleep inertia of the user, the temperature may further decrease (with a variation of 1°C), to help the user wake up as soon as possible.

Step 502: The control device adjusts a target value of a PMV based on the user information.

Step 503: The control device determines, based on the environment information, a device participating in adjustment.

The control device may add a humidity adjustment device with reference to temperature information, humidity information, and other constraint information of the device, to adjust comfort.

It may be understood that, because the relative humidity in the environment is high, in addition to adjusting the temperature, the relative humidity further needs to be adjusted in combination with the humidity adjustment device, to resolve a problem that the relative humidity is excessively high.

There is no requirement on an execution sequence of step 502 and step 503.

Step 504: The control device selects a PMV-PPD thermal comfort model with reference to the environment information.

In this step, because the first model includes a parameter of the relative humidity, the control device does not need to additionally add the parameter and a calculation item related to the relative humidity, and the control device selects the PMV-PPD thermal comfort model based on the environment information for calculation.

Step 505: The control device substitutes the environment information and the user information into the PMV-PPD thermal comfort model, to obtain function relationships between air temperatures, wind speeds, and relative humidities that meet thermal comfort targets in the different sleep stages.

Step 506: The control device obtains, based on a constraint condition and the function relationships between the air temperatures, the wind speeds, and the relative humidities, respective control indicators corresponding to the air temperature, the wind speed, and the relative humidity.

In this step, the control device may set, with reference to a device design principle, an energy consumption constraint, and the like, a low target air temperature (for example, 24°C) and a target wind speed range that enable the wind speed to be moderate, to further output a target ambient humidity range (40%-60% rh) based on the determined air temperature and wind speed range, enable an ambient dehumidification function, and maintain a constant relative humidity after the target humidity range is reached.

Step 507: The control device separately adjusts an air conditioner and the humidity adjustment device based on respective control indicators corresponding to the air conditioner and the humidity adjustment device.

Based on embodiments corresponding to FIG. 1a to FIG. 6b, to better implement the foregoing solutions in embodiments of this application, the following further provides related devices configured to implement the foregoing solutions. Refer to FIG. 7. FIG. 7 is a diagram of a structure of a comfort adjustment apparatus according to an embodiment of this application.

The comfort adjustment apparatus 7000 may be located in the adjustment system shown in FIG. 1a. The comfort adjustment apparatus 7000 includes:

an obtaining module 7001, configured to obtain environment information and user information that correspond to a first space, where the first space is a non-open space;

a processing module 7002, configured to determine, based on the environment information, the user information, and a thermal comfort representation indicator, a control indicator of at least one device corresponding to the first space; and

a control module 7003, configured to control the at least one device based on the control indicator of the at least one device.

In a possible implementation, the obtaining module 7001 is further configured to:
obtain the thermal comfort representation indicator corresponding to the user information.

In a possible implementation, the at least one device includes at least two devices.

The processing module 7002 is further configured to:

determine, based on the environment information, the user information, and the thermal comfort representation indicator, a function relationship between control indicators of the at least two devices corresponding to the first space; and

determine the respective control indicators of the at least two devices based on a first constraint and the function relationship.

The control module 7003 is further configured to:
separately control the at least two devices based on the respective control indicators of the at least two devices.

In a possible implementation, the first constraint includes at least one of an environment constraint, a device constraint, a user constraint, and an energy consumption constraint.

In a possible implementation, the user information includes behavior information of a user and thermal comfort information of the user.

The behavior information of the user includes a stage of a behavior activity of the user.

The thermal comfort information of the user includes at least one of the following: information about clothing, bedding, or another body surface covering, a physiological indicator, a metabolic rate, an age, or a comfort preference that are of the user.

In a possible implementation, the behavior activity of the user is taking a nap.

At least two stages of the behavior activity respectively correspond to different thermal comfort representation indicators.

In a possible implementation, the at least two stages of the behavior activity include at least two of a pre-sleep stage, an in-sleep stage, and an end-of-sleep stage.

In a possible implementation, the environment information includes at least one of an air temperature, a relative humidity, an average radiation temperature, a wind speed, an air volume, a wind direction, noise, and a device surface temperature.

In a possible implementation, the thermal comfort representation indicator includes a predicted mean vote PMV.

In a possible implementation, the processing module 7002 is further configured to:
input the environment information, the user information, and the thermal comfort representation indicator into a first model, to determine the control indicator of the at least one device corresponding to the first space.

In a possible implementation, the first model includes a PMV-PPD thermal comfort model.

In a possible implementation, the control indicator of the at least one device includes at least one of the following: the air temperature, the relative humidity, the wind speed, the wind direction, the device surface temperature, or a glass transmittance.

In a possible implementation, the first space includes a house, a vehicle, a sleeping cabin, or a submarine.

In this embodiment, operations performed by the units in the comfort adjustment apparatus 7000 are similar to those described in the method embodiments shown in FIG. 2, and may be used to implement functions of the control device in the foregoing method embodiments, and may also implement beneficial effect of the foregoing method embodiments. Details are not described herein again. The obtaining module 7001, the processing module 7002, and the control module 7003 may all be implemented by using software, or may be implemented by using hardware.

An embodiment of this application further provides a computer program product including instructions. The computer program product may be software or a program product that includes instructions and that can run on a control device or be stored in any usable medium. When the computer program product runs on at least one control device, the at least one control device is enabled to perform a comfort adjustment method.

An embodiment of this application further provides a computer-readable storage medium. The computer-readable storage medium may be any usable medium that can be stored in a control device, or a data storage device like a data center, integrating one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions. The instructions instruct the control device to perform a comfort adjustment method, or instruct the control device to perform a comfort adjustment method.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions to enable a control device (which may be a personal computer, a server, a network device, or the like) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1. A comfort adjustment method, comprising:

   obtaining environment information and user information that correspond to a first space, wherein the first space is a non-open space;
   determining, based on the environment information, the user information, and a thermal comfort representation indicator, a control indicator of at least one device corresponding to the first space; and
   controlling the at least one device based on the control indicator of the at least one device.

2. The method according to claim 1, wherein before determining, based on the environment information, the user information, and the thermal comfort representation indicator, the control indicator of the at least one device corresponding to the first space, the method further comprises:
   obtaining the thermal comfort representation indicator corresponding to the user information.

3. The method according to claim 1 or 2, wherein the at least one device comprises at least two devices;
   determining, based on the environment information, the user information, and the thermal comfort representation indicator, the control indicator of the at least one device corresponding to the first space comprises:

   determining, based on the environment information, the user information, and the thermal comfort representation indicator, a function relationship between control indicators of the at least two devices corresponding to the first space; and
   determining the respective control indicators of the at least two devices based on a first constraint and the function relationship; and
   controlling the at least one device based on the control indicator of the at least one device comprises:
   separately controlling the at least two devices based on the respective control indicators of the at least two devices.

4. The method according to claim 3, wherein the first constraint comprises at least one of an environment constraint, a device constraint, a user constraint, and an energy consumption constraint.

5. The method according to any one of claims 1 to 4, wherein the user information comprises behavior information of a user and thermal comfort information of the user, wherein

the behavior information of the user comprises a stage of a behavior activity of the user; and
the thermal comfort information of the user comprises at least one of the following: information about clothing, bedding, or another body surface covering, a physiological indicator, a metabolic rate, an age, or a comfort preference that are of the user.

6. The method according to claim 5, wherein the behavior activity of the user is taking a nap; and
at least two stages of the behavior activity respectively correspond to different thermal comfort representation indicators.

7. The method according to claim 6, wherein the at least two stages of the behavior activity comprise at least two of a pre-sleep stage, an in-sleep stage, and an end-of-sleep stage.

8. The method according to any one of claims 1 to 7, wherein the environment information comprises at least one of an air temperature, a relative humidity, an average radiation temperature, a wind speed, an air volume, a wind direction, noise, and a device surface temperature.

9. The method according to any one of claims 1 to 8, wherein the thermal comfort representation indicator comprises a predicted mean vote PMV.

10. The method according to any one of claims 1 to 9, wherein determining, based on the environment information, the user information, and the thermal comfort representation indicator, the control indicator of the at least one device corresponding to the first space comprises:
inputting the environment information, the user information, and the thermal comfort representation indicator into a first model, to determine the control indicator of the at least one device corresponding to the first space.

11. The method according to claim 10, wherein the first model comprises a PMV-PPD thermal comfort model.

12. The method according to any one of claims 1 to 11, wherein the control indicator of the at least one device comprises at least one of the following: the air temperature, the relative humidity, the wind speed, the wind direction, the device surface temperature, or a glass transmittance.

13. The method according to any one of claims 1 to 12, wherein the first space comprises a house, a vehicle, a sleeping cabin, or a submarine.

14. A comfort adjustment apparatus, comprising:

an obtaining module, configured to obtain environment information and user information that correspond to a first space, wherein the first space is a non-open space;
a processing module, configured to determine, based on the environment information, the user information, and a thermal comfort representation indicator, a control indicator of at least one device corresponding to the first space; and
a control module, configured to control the at least one device based on the control indicator of the at least one device.

15. The adjustment apparatus according to claim 14, wherein the obtaining module is further configured to:
obtain the thermal comfort representation indicator corresponding to the user information.

16. The adjustment apparatus according to claim 14 or 15, wherein the at least one device comprises at least two devices;
the processing module is further configured to:

determine, based on the environment information, the user information, and the thermal comfort representation indicator, a function relationship between control indicators of the at least two devices corresponding to the first space; and

determine the respective control indicators of the at least two devices based on a first constraint and the function relationship; and

the control module is further configured to:

separately control the at least two devices based on the respective control indicators of the at least two devices.

17. The adjustment apparatus according to claim 16, wherein the first constraint comprises at least one of an environment constraint, a device constraint, a user constraint, and an energy consumption constraint.

18. The adjustment apparatus according to any one of claims 14 to 17, wherein the user information comprises behavior information of a user and thermal comfort information of the user, wherein

the behavior information of the user comprises a stage of a behavior activity of the user; and
the thermal comfort information of the user comprises at least one of the following: information about clothing, bedding, or another body surface covering, a physiological indicator, a metabolic rate, an age, or a comfort preference that are of the user.

19. The adjustment apparatus according to claim 18, wherein the behavior activity of the user is taking a nap; and at least two stages of the behavior activity respectively correspond to different thermal comfort representation indicators.

20. The adjustment apparatus according to claim 19, wherein the at least two stages of the behavior activity comprise at least two of a pre-sleep stage, an in-sleep stage, and an end-of-sleep stage.

21. The adjustment apparatus according to any one of claims 14 to 20, wherein the environment information comprises at least one of an air temperature, a relative humidity, an average radiation temperature, a wind speed, an air volume, a wind direction, noise, and a device surface temperature.

22. The adjustment apparatus according to any one of claims 14 to 21, wherein the thermal comfort representation indicator comprises a predicted mean vote PMV.

23. The adjustment apparatus according to any one of claims 14 to 22, wherein the processing module is further configured to:
input the environment information, the user information, and the thermal comfort representation indicator into a first model, to determine the control indicator of the at least one device corresponding to the first space.

24. The adjustment apparatus according to claim 23, wherein the first model comprises a PMV-PPD thermal comfort model.

25. The adjustment apparatus according to any one of claims 14 to 24, wherein the control indicator of the at least one device comprises at least one of the following: the air temperature, the relative humidity, the wind speed, the wind direction, the device surface temperature, or a glass transmittance.

26. The adjustment apparatus according to any one of claims 14 to 25, wherein the first space comprises a house, a vehicle, a sleeping cabin, or a submarine.

27. A control device, comprising a memory and a processor, wherein

the memory is configured to store a computer program; and
the processor is configured to execute the computer program, so that the control device implements the method according to any one of claims 1 to 13.

28. An adjustment system, comprising a plurality of devices and the control device according to claim 27.

29. A computer-readable storage medium, wherein the storage medium stores a computer program, and when the computer program is executed by a processor, the method according to any one of claims 1 to 13 is implemented.

100

Adjustment system

Control
device    11

Device    Device    ...    Device    12

FIG. 1a

11

Control device

Processor    111    Processor    115

CPU 0    CPU 0

CPU 1    CPU 1    Memory    113

Communication
bus    112    Program
code

Communication
interface    114

FIG. 1b

Obtain environment information and user information that correspond to a first space, where the first space is a non-open space — S1

Determine, based on the environment information, the user information, and a thermal comfort representation indicator, a control indicator of at least one device corresponding to the first space — S2

Control the at least one device based on the control indicator of the at least one device — S3

FIG. 1c

A control device obtains environment information and user information that correspond to a first space — 201

The control device adjusts a comfort representation indicator based on the user information, to obtain an adjusted comfort representation indicator — 202

The control device determines, based on the environment information, the user information, and the adjusted comfort representation indicator, a function relationship between control indicators of at least one device corresponding to the first space — 203

The control device obtains, based on the function relationship, the control indicators corresponding to the at least one device — 204

The control device controls the at least one device based on the control indicators of the at least one device — 205

FIG. 2

FIG. 3

A control device obtains environment information and user information in a vehicle — 401

↓

The control device adjusts a target value of a PMV based on the user information — 402

↓

The control device determines, based on the environment information, a device participating in adjustment — 403

↓

The control device adds, to a PMV-PPD thermal comfort model with reference to the environment information, a heat conduction term corresponding to calculation of a seat surface temperature — 404

↓

The control device substitutes the environment information and the user information into the PMV-PPD thermal comfort model, to obtain function relationships between air temperatures and seat surface temperatures that meet thermal comfort targets in different sleep stages — 405

↓

The control device obtains, based on a constraint condition and the function relationships between the air temperatures and the seat surface temperatures, respective control indicators corresponding to an air conditioner and a seat — 406

↓

The control device separately adjusts the air conditioner and the seat based on the respective control indicators corresponding to the air conditioner and the seat — 407

FIG. 4

A control device obtains environment information and user information — 501

The control device adjusts a target value of a PMV based on the user information — 502

The control device determines, based on the environment information, a device participating in adjustment — 503

The control device selects a PMV-PPD thermal comfort model with reference to the environment information — 504

The control device substitutes the environment information and the user information into the PMV-PPD thermal comfort model, to obtain function relationships between air temperatures, wind speeds, and air humidities that meet thermal comfort targets in different sleep stages — 505

The control device obtains, based on a constraint condition and the function relationships between the air temperatures, the wind speeds, and the air humidities, respective control indicators corresponding to the air temperature, the wind speed, and the air humidity — 506

The control device separately adjusts an air conditioner and a humidity adjustment device based on respective control indicators corresponding to the air conditioner and the humidity adjustment device — 507

FIG. 5

FIG. 6a

FIG. 6b

```
┌─────────────────────────────────────────────────────┐
│         Comfort adjustment apparatus 7000            │
│                                                       │
│      ┌─────────────────────────────────────┐         │
│      │       Obtaining module 7001         │         │
│      └─────────────────────────────────────┘         │
│                        │                              │
│      ┌─────────────────────────────────────┐         │
│      │       Processing module 7002        │         │
│      └─────────────────────────────────────┘         │
│                        │                              │
│      ┌─────────────────────────────────────┐         │
│      │        Control module 7003          │         │
│      └─────────────────────────────────────┘         │
│                                                       │
└─────────────────────────────────────────────────────┘
```

FIG. 7

## INTERNATIONAL SEARCH REPORT

| International application No. |
| --- |
| **PCT/CN2024/114096** |

**A. CLASSIFICATION OF SUBJECT MATTER**

B60H1/00(2006.01)i;  F24F11/64(2018.01)i;  F24F11/00(2018.01)i

According to International Patent Classification (IPC) or to both national classification and IPC

**B. FIELDS SEARCHED**

Minimum documentation searched (classification system followed by classification symbols)

IPC: B60H1/-;  F24F11/-

Documentation searched other than minimum documentation to the extent that such documents are included in the fields searched

Electronic data base consulted during the international search (name of data base and, where practicable, search terms used)

CNABS, CNTXT, ENTXT, ENTXTC, VEN, CNKI: 华为, 王一璇, 孙智达, 车内, 温控, PMV, 舒适度, 舒适性, 车窗, 对象, 函数, 阶段, 模式, 模型, 热偏好, 热舒适, 人, 睡眠, 睡着, 条件, 用户, 约束, 座位, 座椅, comfort level, vehicle, each device, PMV-PPD model, comfort model, environment parameter

**C. DOCUMENTS CONSIDERED TO BE RELEVANT**

| Category* | Citation of document, with indication, where appropriate, of the relevant passages | Relevant to claim No. |
| --- | --- | --- |
| X | CN 115593177 A (GREAT WALL MOTOR CO., LTD.) 13 January 2023 (2023-01-13) description, paragraphs 38-83 | 1-4, 14-17, 27-29 |
| Y | CN 115593177 A (GREAT WALL MOTOR CO., LTD.) 13 January 2023 (2023-01-13) description, paragraphs 38-83 | 5-13, 18-29 |
| Y | CN 106123206 A (MIDEA GROUP CO., LTD.) 16 November 2016 (2016-11-16) description, paragraphs 82-87 | 5-13, 18-29 |
| A | CN 114801649 A (TONGJI UNIVERSITY) 29 July 2022 (2022-07-29) entire document | 1-29 |
| A | US 2020317024 A1 (GM GLOBAL TECHNOLOGY OPERATIONS LLC) 08 October 2020 (2020-10-08) entire document | 1-29 |
| A | US 2023011191 A1 (FAURECIA INTERIEUR INDUSTRIE) 12 January 2023 (2023-01-12) entire document | 1-29 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 October 2024** | **04 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/114096**

| Patent document cited in search report | | | Publication date (day/month/year) | Patent family member(s) | | | Publication date (day/month/year) |
|---|---|---|---|---|---|---|---|
| CN | 115593177 | A | 13 January 2023 | None | | | |
| CN | 106123206 | A | 16 November 2016 | CN | 106123206 | B | 23 November 2018 |
| CN | 114801649 | A | 29 July 2022 | None | | | |
| US | 2020317024 | A1 | 08 October 2020 | US | 10981433 | B2 | 20 April 2021 |
| US | 2023011191 | A1 | 12 January 2023 | FR | 3124985 | A1 | 13 January 2023 |
| | | | | FR | 3124985 | B1 | 30 June 2023 |
| | | | | US | 12070987 | B2 | 27 August 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311084907